# EUROPÄISCHE PATENTSCHRIFT

(11) **EP 0 417 177 B1**
(45) Veröffentlichungstag und Bekanntmachung des Hinweises auf die Patenterteilung: **27.10.1993**
(21) Anmeldenummer: 89906757.3
(22) Anmeldetag: 31.05.1989
(51) Int. Cl.: A47F 5/10, A47F 5/14, A47B 57/04, F16B 12/32

(54) **REGALSYSTEM**
SHELVING SYSTEM
SYSTEME DE RAYONNAGE

(30) Priorität: 31.05.1988 DE 3818525; 08.06.1988 DE 3819512
(43) Veröffentlichungstag der Anmeldung: 20.03.1991
(73) Patentinhaber: KÖNIG-HAUG, Beatrice, D-8021 Strasslach (DE)
(72) Erfinder: KÖNIG-HAUG, Beatrice, D-8021 Strasslach (DE)
(74) Vertreter: Bohnenberger, Johannes, Dr.
(86) Internationale Anmeldenummer: EP8900611
(87) Internationale Veröffentlichungsnummer: WO8911813

(56) Entgegenhaltungen:
- EP-A- 0 171 485
- EP-A- 0 195 852
- CH-A- 474 243
- FR-A- 1 119 001
- FR-A- 1 261 347
- FR-A- 2 538 868
- US-A- 1 705 237

## Beschreibung

Die Erfindung betrifft ein Regalsystem nach dem Oberbegriff des Patentanspruches 1 oder 2.

Es ist eine Vielzahl von Regalsystemen bekannt, bei denen der Benutzer eine gewisse Anzahl von Regalböden, von Säulenelementen und Verbindungselementen erwirbt, mit denen er die Regalböden an den Säulenelementen in abgestuften Höhen befestigen kann, so daß er das aufzubauende Regal den Bedürfnissen entsprechend anpassen kann. Hierbei dreht es sich zum einen um eine Anpassung an die benötigte Stellfläche, zum anderen um eine Anpassung an räumliche und geschmackliche Gegebenheiten. Will der Benutzer z.B. eine Regal in einen Raum einpassen, dessen Wand auf eine Dachschräge zuläuft, so wird die Konstruktion eines angepaßten Regals seht schwierig, insbesondere muß eine übermäßige Anzahl von Säulenelementen verwendet werden, um die nach oben hin sukzessive kürzer werdenden bzw. verschobenen Regalbretter korrekt abzustützen. Was die Anpassung eines Regals an geschmackliche Besonderheiten betrifft, so ist der Benutzer herkömmlicher Regale an senkrechte Säulenelemente gebunden.

Ein Regalsystem ist aus dem DE-Gm 19 85 709 bekannt. Bei diesem System sind mehrere Regalböden nahe deren Ecken stirnseitig an Säulenelementen angelenkt, wovon das eine Paar von Säulenelementen die tragende Funktion übernimmt, während das andere Paar von Säulenelementen über Streben am ersten Paar von Säulenelementen befestigt ist, so daß die Regalböden in einer einstellbaren Parallelogrammführung gehalten sind. Stellt man die tragenden Säulen senkrecht, so kann man die Regalböden zur Horizontalen kippen, um z.B. Bücher zu Präsentationszwecken schräg liegend darbieten zu können. Man kann nun bei diesem System die tragenden Säulen auch in einer Richtung senkrecht zu den Längsseiten der Regalböden verkippen, so daß diese in ihrer Tiefe gegeneinander versetzt gehalten sind. Auch bei dieser bekannten Anordnung ist es nicht möglich, ein Regal z.B. einer Dachschräge anzupassen.

Aus dem DE-Gm 18 84 722 sind Winkelträger bekannt, die an vertikalen Säulen angebracht ebenfalls das Schrägstellen der Regalböden zu Präsentationszwecken daraufliegender Gegenstände ermöglichen. Auch hier ist eine Anpassung an Gegebenheiten des Aufstellungsortes nicht möglich.

Aus der FR-A-1 119 001 ist ein Regalsystem nach dem Oberbegriff das Patentanspruches 1 oder 2 bekannt. Dieses bekannte System weist jedoch eine äußerst geringe Stabilität auf, so daß ungleichförmige Belastungen zu einem Kippen der Regalböden führen können.

Der Erfindung liegt die Aufgabe zugrunde, ein Regalsystem der eingangs genannten Art dahingehend weiterzubilden, daß unter Beibehaltung einer hohen Variabilität eine höhere Stabilität erzielbar ist.

Diese Aufgabe wird entweder durch den Gegenstand des Anspruches 1 oder den Gegenstand des Anspruches 2 gelöst.

In der einen Ausführungsalternative sind die Säulenelemente als Paare von Stäben ausgebildet, während jedes Verbindungselement ebenso paarig ausgebildete Feststellelemente umfaßt, die voneinander in Längsrichtung der Regalböden beabstandet sind. Mittels dieser Feststellelemente kann jeder der zu einem Säulenelement gehörende Stab an einem Regalboden mindestens in dessen Längsrichtung montiert werden. Die Drehfestigkeit einer solchen Verbindung ergibt sich dadurch, daß bei einem Verkippen des Regalbodens gegenüber den beiden Stäben der Abstand zwischen den Stäben verändert werden müßte. Wenn diese Stäbe nun in ihrem Abstand zueinander fixiert sind, so ergibt sich eine "selbsttätige" Versteifung der Anordung.

In der anderen Alternative zur Ausführung des eingangs genannten Erfindungsgedankens ist eine Anordnung vorgesehen, bei der jedes Säulenelement (nur) einen einzigen Stab umfaßt, wobei jedes Gelenk ein in Querrichtung der Regalböden verlaufendes und an Säulenelement festsetzbares Achselement sowie mindestens ein an Zwischenstab und Regalboden festsetzbares Drehsicherungselement umfaßt. Die so ausgebildete Anordnung ist noch variabler als die zuvor geschilderte, da ohne weiteres auch bogenförmige Säulenelemente Verwendung finden können. Insbesondere in gestalterischer Hinsicht erhält hier der Benutzer die größte Freiheit.

Ein solches Drehsicherungselement umfaßt vorzugsweise ein Verbindungselement, das an einem Ende mit Abstand von Achselement an einem ersten Befestigungspunkt am Regalboden, am anderen Ende ebenfalls mit Abstand vom Achselement an einem Befestigungselement an der Säule befestigt ist. Dies entspricht im wesentlichen einem Versteifungselement mit im Dreieck verlaufendem Kräftezug. Zur Einstellung des Winkels zwischen Regalboden und Säulenelement kann man nun jede der Dreieckskanten (einzeln oder mehrere gemeinsam) verändern, wobei vorzugsweise stufenlos einstellbare Elemente Verwendung finden, gegebenenfalls zusätzlich noch abgestufte "Grob"-Verstellmöglichkeiten vorgesehen werden.

Bei einer anderen Alternative zur Ausführung einer Drehsicherung wird eine Versteifung des Drehgelenkes vorgenommen. In seiner einfachsten Form ist dieser Gedanke mit einer reibschlüssigen Verbindung (gegebenenfalls mit zusätzlich formschlüssigen Verbindungselementen) verwirklicht.

Die Anbringung der Anordnung an einzelnen Säulenelementen ist dann besonders einfach, wenn diese der Länge nach Schlitze oder schlitzförmige Abschnitte aufweisen, in denen die Verbindungselemente festsetzbar sind. Die Handhabung der Anordnung ist beim Aufbau dann besonders einfach, wenn die Verbindungselemente als derart kompakte Einheiten ausgebildet sind, daß sie zum einen an den Säulenelementen eingehängt, zum anderen mit einfachen Mitteln an den Regalböden befestigbar sind. Hierbei ist es von Vorteil, wenn die Regalböden einen insbesondere aus Metall bestehenden Rahmen umfassen, an den die Verbindungselemente mit der notwendigen Festigkeit fixiert werden können. In diesen Rahmen sind nun Flächenelemente einsetzbar, deren Materialwahl (Holz, Glas, Metall usw.) dem Benutzer überlassen bleibt, ohne dabei die Konstruktion verändern zu müssen bzw. für jede Art von Flächenelement besondere Verbindungselemente verwenden zu müssen.

Weitere erfindungswesentliche Einzelheiten ergeben sich aus den Unteransprüchen. Es folgt eine Beschreibung bevorzugter Ausführungsformen der Erfindung, die anhand von Abbildungen näher erläutert werden. Hierbei zeigen:
- Fig. 1: eine perspektivische Ansicht eines aufgebauten Regals gemäß einer ersten alternativen Ausführungsform;
- Fig. 2: eine perspektivische Darstellung einer zweiten Ausführungsform;
- Fig. 3: eine perspektivische Ansicht eines Verbindungselementes mit Säulenabschnitten und Regalboden gemäß der Ausführungsform nach Fig. 1;
- Fig. 4a bis 4c: verschiedene Anbringungsweisen der Säulen am Verbindungselement nach Fig. 3;
- Fig. 5a bis 5o: teilweise geschnittene Detailansichten des Verbindungselementes nach Fig. 3;
- Fig. 6 bis 12: sieben verschiedene bevorzugte Ausführungsformen von Verbindungselementen gemäß Fig. 2;
- Fig. 13a bis 13f: bevorzugte Ausführungsformen von Befestigungsarten zwischen Verbindungselement und Säulenelement;
- Fig. 14a bis 14f: bevorzugte Ausführungsformen von Säulenelementen gemäß Fig. 2;
- Fig. 15a bis 15d: eine bevorzugte Ausführungsform einer Befestigung zwischen Verbindungselement und Säulenelement;
- Fig. 16: eine bevorzugte Ausführungsform eines Regalbrettes gemäß Fig. 1 und 2;
- Fig. 17 bis 20: vier verschiedene Ausführungsformen der Befestigungsvorrichtungen zwischen Regalböden und allen Verbindungselementen.

Bei der folgenden Beschreibung der bevorzugten Ausführungsformen werden für gleiche oder gleichwirkende Teile immer dieselben Bezugsziffern verwendet und nur einmal erläutert.

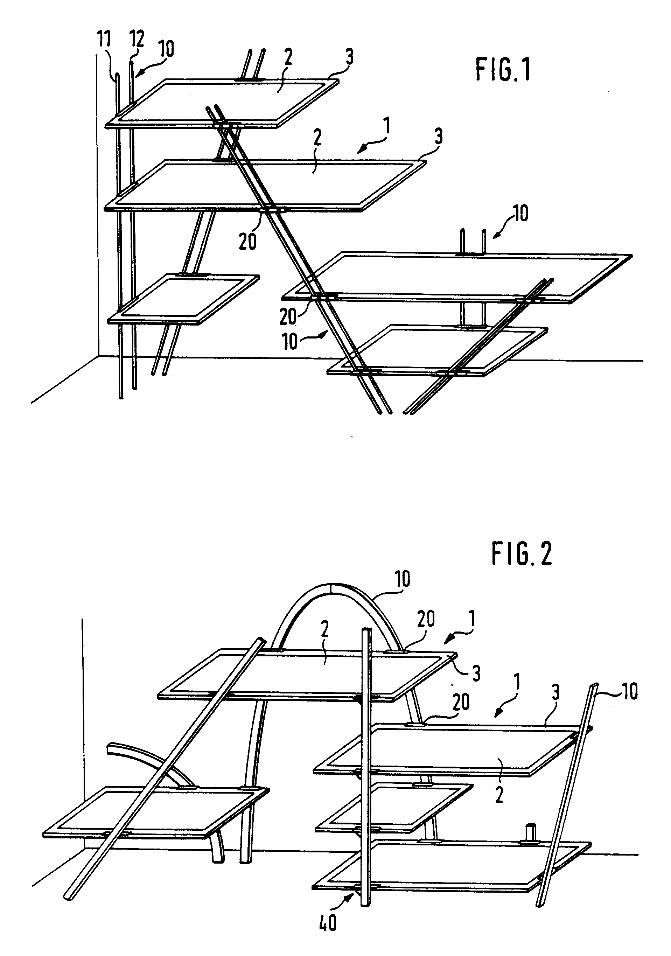

In Fig. 1 ist die erste bevorzugte Ausführungsform gezeigt, bei welcher jedes Säulenelement 10 aus zwei Stäben 11 und 12 besteht. An diese Stäbe 11 und 12 werden die Regalböden 11, bestehend aus einem Flächenelement 2 und einem dieses aufnehmenden Rahmen 3 über Verbindungselement 20 fixiert. Die Fixierpunkte können - wie dies weiter unten noch näher erläutert werden wird - in Stufen gewählt werden. Durch die besondere Konstruktion ist es nun möglich, die Säulenelemente 10 sowohl ganz vertikal, als auch schräg verlaufend aufzustellen, so daß nicht nur den baulichen Gegebenheiten am Aufstellort, sondern auch geschmacklichen Wünschen in vollem Umfang Rechnung getragen werden kann.

Bei der in Fig. 2 gezeigten alternativen Ausführungsform umfaßt jede Säule nur einen einzigen Stab (der selbstverständlich aus mehreren fest miteinander verbundenen Stäben aufgebaut sein kann). Jedes Verbindungselement weist ein Achselement auf, über das ein Gelenk mit einem Freiheitsgrad zwischen Regalboden 1 und Säulenelement 10 gebildet wird. Dieses Achselement ist nun über ein Drehsicherungselement 40 sperrbar.

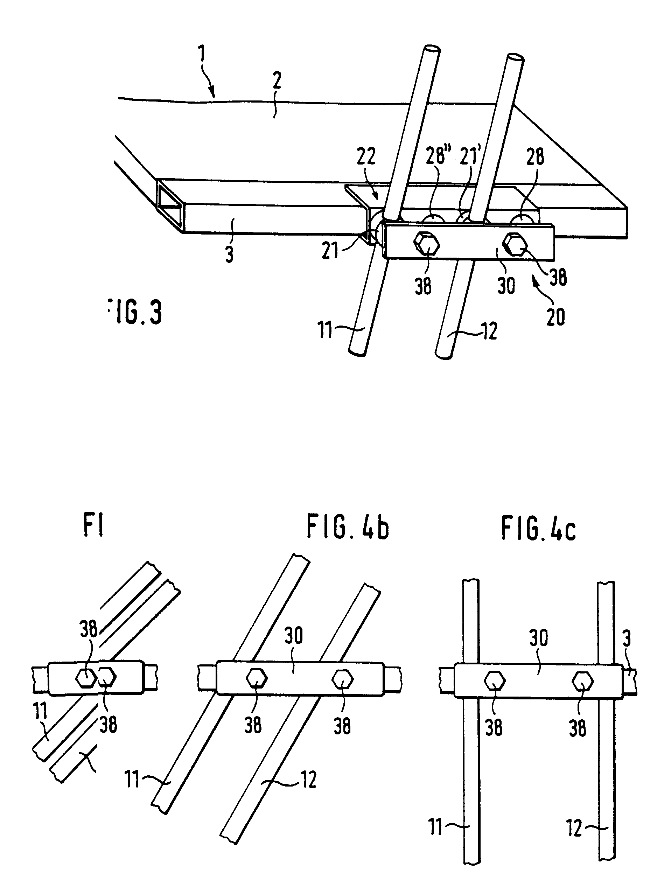

Im folgenden wird anhand der Figuren 3 bis 5 eine bevorzugte Ausführungsform eines Verbindungselementes 20 erläutert, wie dies in Fig. 1 gezeigt ist. Bei dieser Ausführungsform umfaßt jedes Verbindungselment 20 am eine Schiene 22, über die das Verbindungselement 20 am Rahmen 3 eines Regalbodens 1 befestigt werden kann. Zwischen der Bodenschiene 22 und einer Andruckschiene 30 sind Feststellelemente 21, 21' vorgesehen, die jeweils einen Stab 11 bzw. 12 umfassen und spannen können. Zum Festspannen der Feststellelemente 21, 21' wird die Andruckschiene 30 mittels Schraubenelementen, deren Hutmuttern 38 in Fig. 3 zu sehen sind, in Richtung auf die Bodenschiene 20 festgezogen, so daß auf die Feststellelemente 21, 21' ein senkrecht zur Längsrichtung der Stäbe 11, 12 verlaufender Druck ausgeübt wird. Die Feststellelemente 21, 21' sind hierbei in Lagerlöchern 28-28''' eingesetzt, in denen sie um eine in Oberflächenrichtung der Regalböden 1 verlaufende Achse verdrehbar sind, solange die Hutmuttern 38 noch nicht angezogen sind. Hierbei ist sowohl in der Bodenschiene 22 als auch in der Andruckschiene 30 eine Vielzahl von derartigen Lagerlöchern vorgesehen, von denen in Fig. 3 nur zwei (28, 28'') sichtbar sind, während die beiden übrigen vorgesehenen Lagerlöcher (28', 28''') von den gezeigten Feststellelementen 21, 21' "besetzt" sind.

Durch diese Anbringung von mehreren Lagerlöchern 28-28''' ist es nun möglich, Stäbe 11, 12 in verschiedenen Abständen voneinander anzuordnen, wie dies in den Fig. 4a bis 4c angedeutet ist. Dadurch bekommt der Benutzer nicht nur in geschmacklicher Hinsicht größere Freiheiten, auch Stabilitätskriterien können hierdurch berücksichtigt werden.

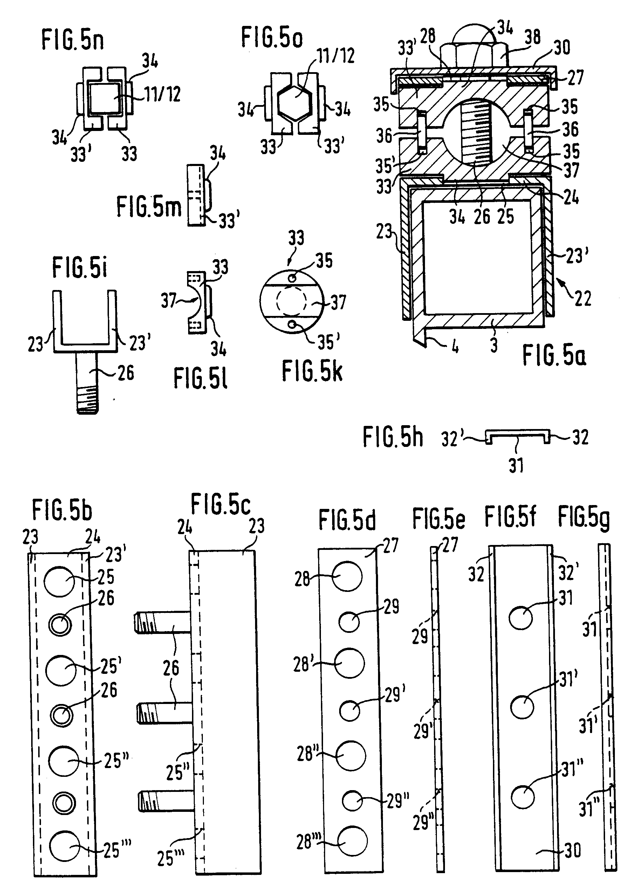

Im folgenden wird eine besonders bevorzugte Ausführungsform des in den Figuren 1, 3 und 4 gezeigten Verbindungselementes 20 anhand von Fig. 5 näher beschrieben. Hierbei zeigt Fig. 5a einen Schnitt durch ein zusammengesetztes Verbindungselement mit eingesetztem Rahmen 3, wobei aus zeichnerischen Gründen eine Position des Feststellelementes 21 gezeigt ist, die an sich unmöglich ist. Aus Abbildung 5 geht hervor, daß ein Verbindungselement 20 eine Bodenschiene 22 umfaßt, in welcher mehrere Lagerlöcher 25-25''' (Fig. 5b bis 5e) vorgesehen sind. Weiterhin sind jeweils zwischen zwei Lagerlöchern 25-25''' Gewindestehbolzen 26 vorgesehen, die in Richtung der Ebene und senkrecht zur Längsrichtung eines Regalbodens 1 von einem Querband 24 der Bodenschiene 22 hervoragen, das über Schenkel 23, 23' zu einem U-förmigen Profil ergänzt wird. Die Feststellelemente 21, 21' umfassen Klemmhalbschalen 33, 33', die in der Ausführungsform nach Fig. 5 einen zur Lagerachse kreisförmigen Querschnitt aufweisen. Aus geschmacklichen Gründen können selbstverständlich auch andere Querschnittsformen vorgegeben werden. Jede der Klemmhalbschalen 33, 33' weist einen Lagerzapfen 34 auf, der so bemessen ist, daß er in ein Lagerloch 25 mit nur geringem Spiel einsetzbar ist. Gegenüber dem Lagerzapfen 34 sind in den Klemmhalbschalen Säulenöffnungen 37 vorgesehen, deren Kontur dem festzuklemmenden Stab 11/12 abgepaßt ist, also kreisförmig bei runden Stäben, sechseckig bei Sechskantstäben und quadratisch bei quadratischen Stäben. Die Längsrichtungen der Säulenöffnungen 37 verlaufen hierbei senkrecht zu den Mittelachsen der Lagerzapfen 34.

Um die Stabilität der Feststellelemente 21, 21' weiter zu erhöhen, sind in den Klemmhalbschalen 33, 33' Justierbohrungen 35, 35' eingesetzt, so daß zwei Klemmhalbschalen 33, 33' über Justierstifte 36 miteinander drehfest verbindbar sind, die mit ihren Enden in den Justierbohrungen 35, 35' sitzen. Die Justierbohrungen 35, 35' sind hierbei so tief in die Klemmhalbschalen 33, 33' eingesenkt, daß die zwei Klemmhalbschalen 33, 33' hinreichend weit aufeinander zu bewegt werden können, um die Säulenöffnung 37 soweit zu schließen, daß ein Stab 11/12 fest eingeklemmt wird.

Gegenüber den Bodenschienen 22 sitzen die Lagerzapfen 34 der oberen (der dem Regalboden 1 abgewandten Klemmhalbschalen 33') in Lagerlöchern 28-28''' von Lagerschienen 27, die neben den Lagerlöchern 28-28''' noch Durchgangslöcher 29-29'' aufweisen, durch welche die Gewindestehbolzen 26 hindurchragen. Zum Zusammendrücken der beiden Klemmhalbschalen 33, 33' dient die Andruckschiene 30, die bei der hier gezeigten Ausführungsform ein U-Profil aufweist, dessen Schenkel mindestens über den Rand der Lagerschiene 27 ragen, so daß diese fest gefaßt ist und die Andruckschiene 30 gleichzeitig an Biegesteifigkeit gewinnt. Die Andruckschiene 30 weist, wie in Fig. 5f-h gezeigt, keine Lagerlöcher 25 mehr auf, sondern nur noch Durchgangslöcher 31-31'', durch welche die Gewindeenden der Gewindestehbolzen 26 hindurchragen. Die Stehbolzen 26 sind hierbei in ihrer Länge so bemessen, daß die Hutmuttern 38 genügend weit aufgeschraubt werden können, um die Klemmhalbschalen 33, 33' bei eingesetztem Stab 11/12 über die Andruckschienen 30 fest aufeinanderspannen zu können. Bei diesem Festspannen wird einerseits eine reibschlüssige Verbindung zwischen einen eingesetzten Stab 11/12 und den Klemmhalbschalen 33, 33' erreicht, andererseits wird eine reibschlüssige Verbindung zwischen den Klemmhalbschalen 33, 33' und der Bodenschiene 22 sichergestellt. Die letztere reibschlüssige Verbindung, die eine Verdrehsicherung darstellt, ist bei der Ausführungsform nach den Figuren 1, 3 und 4 dann nicht unbedingt notwendig, wenn die Abstände zwischen den Stäben 11 und 12 durch entsprechende Konstruktionselemente konstant gehalten werden. In jedem Fall aber ergibt sich eine Versteifung des aufgebauten Regals.

Im folgenden werden verschiedene, untereinander zum größten Teil kombinierbare Ausführungsformen von Verbindungselementen 20 näher beschrieben, die bei der alternativen Ausführungsform nach Fig. 2 Verwendung finden, bei welcher die Säulenelemente 10 einstückig sind.

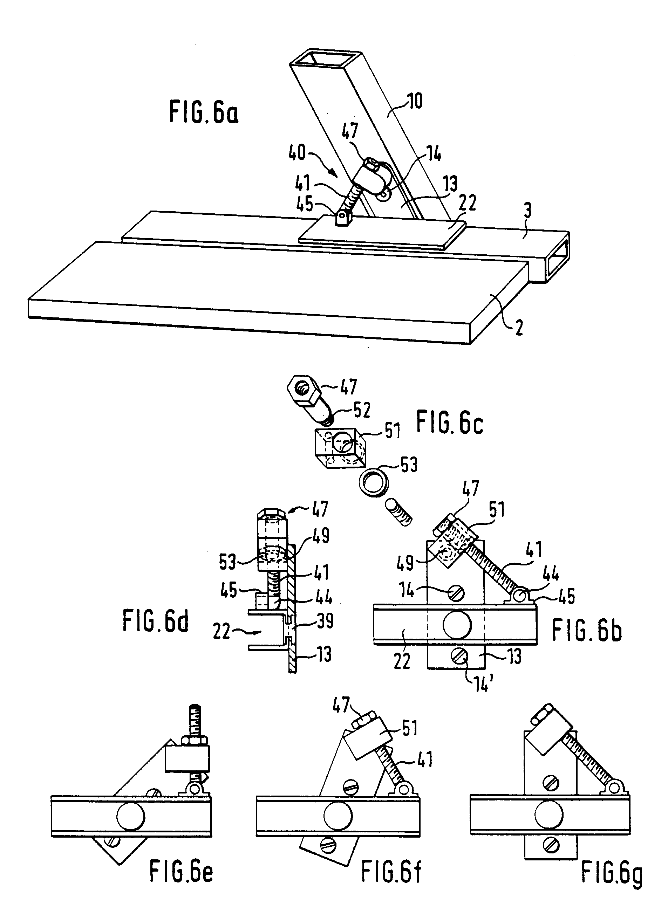

Bei der in Fig. 6 gezeigten bevorzugten Ausführungsform ist wieder eine Bodenschiene 22 zum Fixieren des Verbindungselementes am Rahmen 3 eines Regalbrettes vorgesehen. Diese Bodenschiene 22 ist über einen Achszapfen 39 mit einer Säulenschiene 13 (spielfrei) verbunden. Die Säulenschiene 13 kann über Befestigungsschrauben 14, 14' an einem Säulenelement 10 befestigt werden.

Zwischen der Säulenschiene 13 und der Bodenschiene 22 ist ein Verbindungsstück 41 so angeordnet, daß es mit jeweils einem Ende an jeweils einem Teil festsitzt. Bei der hier gezeigten ersten bevorzugten Ausführungsform umfaßt das Verbindungsstück 41 einen Gewindeabschnitt, der an seinem Ende einen Schenkelzapfen 44 aufweist, welcher senkrecht zur Längsrichtung des Gewindeabschnittes abgewinkelt ist. Dieser Schenkelzapfen 44 steckt in einem Haltebügel 45, der an der Bodenschiene 22 befestigt ist, so daß das Verbindungsstück 41 in der zur Regalbodenlängsrichtung senkrecht zur Regalbodenfläche verlaufenden Ebene verschwenkt werden kann.

Auf dem Gewindeabschnitt des Verbindungsstückes 41 ist eine Einstellmutter 47 aufgeschraubt, die an ihrem, dem Haltebügel 45 zugewandten Ende einen Schuß 52 mit Außengewinde aufweist. Die Einstellmutter 47 ist in einen Halter 51 eingesetzt, der über eine Verbindungsschraube 49 (oder eine Niete) senkrecht zur Längsachse des Verbindungsstückes 41 verdrehbar auf der Säulenschiene 13 befestigt ist. Um die Einstellmutter 47 in Längsrichtung zum Verbindungsstück 41 im Halter 51 zu befestigen, ist eine Mutter 53 auf den Gewindeschuß 52 aufgeschraubt. Die so entstehende Verbindung kann also Zug- und Schubkräfte aufnehmen. Die so ausgebildete Verbindung ist, wie dies in den Figuren 6e bis 6g dargestellt ist, in weiten Bereichen stufenlos einstellbar. Das Grundprinzip der Anordnung beruht darauf, daß der dem durch den Achszapfen 39 verlaufenden Drehpunkt gegenüberliegende Schenkel in seiner Länge verändert wird, während die beiden anderen Schenkel unverändert bleiben.

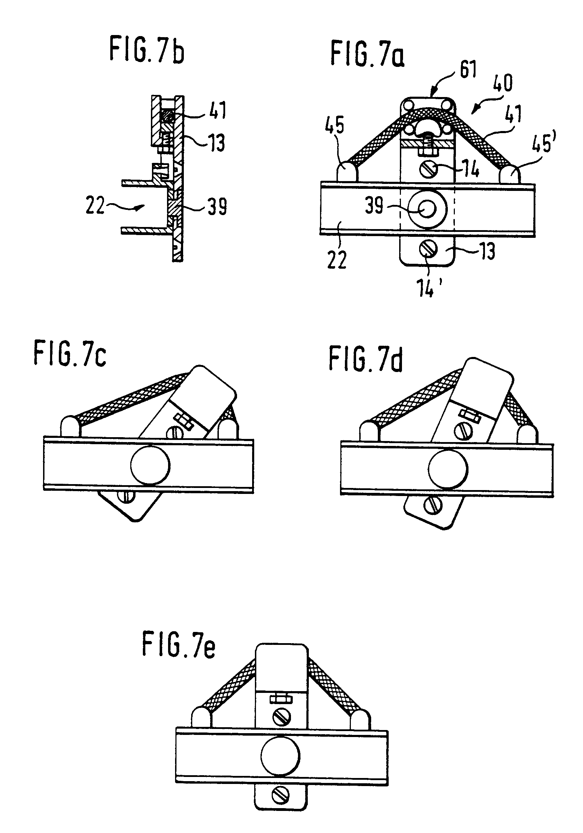

Die in Fig. 7 gezeigte weitere bevorzugte Ausführungsform basiert auf demselben Bewegungsprinzip, wobei das Verbindungsstück 41 als Seil oder Kette ausgebildet ist. An seinen zwei Enden ist das Verbindungsstück 41 über Haltebügel 45, 45' mit der Bodenschiene 22 verbunden, wobei diese beiden Haltebügel 45, 45' gleiche Abstände zum Achszapfen 39 aufweisen. An der Säulenschiene 13 ist das Verbindungsstück 41 über eine Klemmvorrichtung 61 festsetzbar, wobei diese eine Klemmschraube umfaßt, welche auf ein Klemmstück wirkt, das zwischen Führungszapfen in Richtung auf Gegenhaltezapfen verschiebbar ist. Die Anordnung der Klemmschraube ist hierbei derart gewählt, daß über sie auch ein Längenausgleich des Verbindungsstückes 41 bewerkstelligt werden kann, der je nach eingestelltem Winkel notwendig ist.

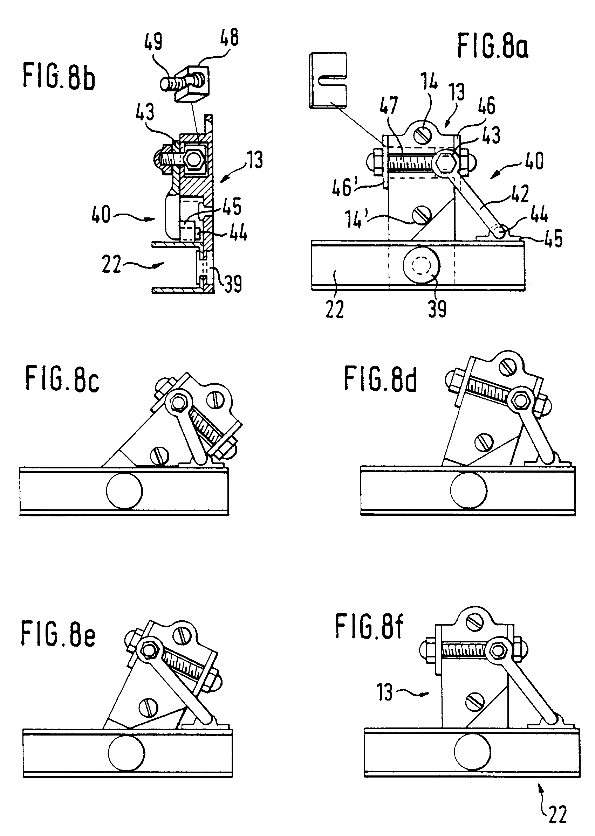

Bei der in Fig. 8 gezeigten dritten bevorzugten Ausführungsform umfaßt das Drehsicherungselement 40 einen Stab 42, der an seinem Ende wieder einen rechtwinkelig abgebogenen Schenkelzapfen 44 trägt, welcher in den Haltebügel 45 an der Bodenschiene 42 einsteckbar ist. Am anderen Ende ist der Stab 42 mit einem Auge 43 versehen. Mit dem Auge 43 ist der Stab 42 auf einem Schlitten 48 festsetzbar, wobei durch das Auge 43 eine Verbindungsschraube 49 des Schlittens 48 ragt, so daß der Stab 42 mittels einer Hutmutter befestigt werden kann.

Der Schlitten 48 weist eine Gewindebohrung auf, durch welche eine Einstellschraube 47 führt, die zwischen Schenkeln 46, 46' in Längsrichtung fest aber drehbar montiert ist. Die Schenkel 46, 46' ragen von der Säulenschiene 13 in Richtung auf das Regalbrett und zwar derart, daß die Einstellschraube 47 senkrecht zur Längsrichtung der (nicht gezeigten) Säule verläuft.

Wird nun der Schlitten 48 durch Drehung der Einstellschraube 47 verschoben, so kann der Winkel zwischen Regalboden und Säulenelement eingestellt werden. Der Einstellbereich kann dadurch vergrößert werden, daß man einen Satz von verschieden langen Stäben 42 vorsieht, wie dies in den Figuren 8c/d bzw. 8e/f gezeigt ist. Wenn man von einer konstanten Länge des Stabes 42 ausgeht, so wird hier nicht der im Achszapfen 39 gegenüberliegende Schenkel in seiner Länge verändert, es wird vielmehr die Lage seines Endpunktes bezüglich des Achszapfens 39 über die Einstellschraube 47 stufenlos eingestellt.

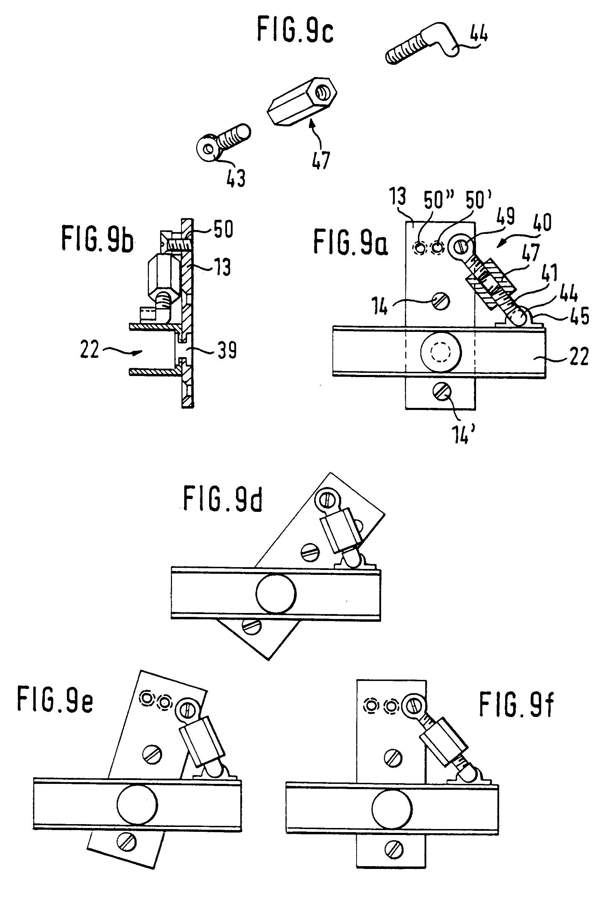

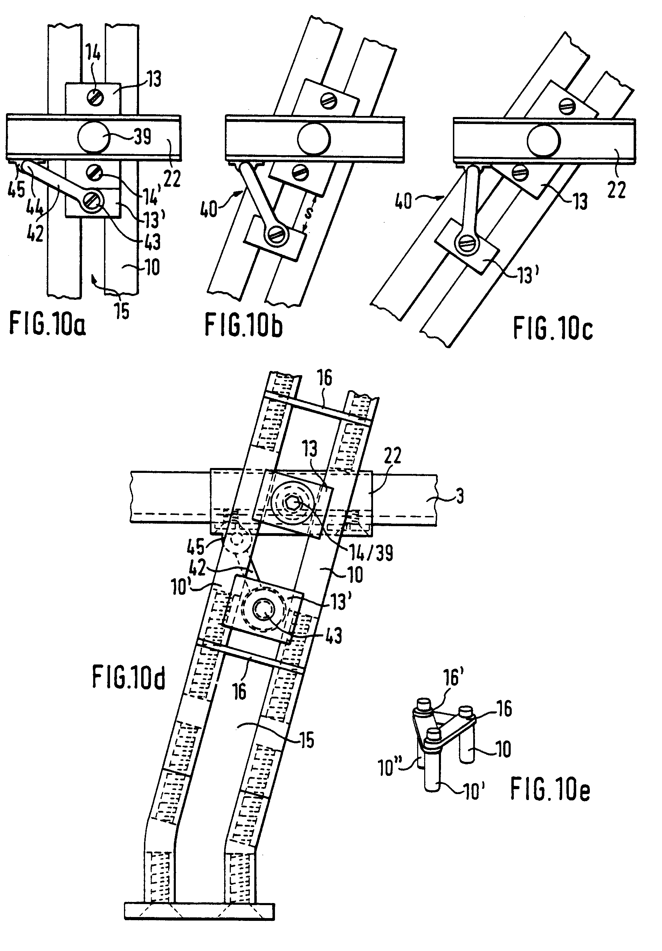

Bei der in Fig. 9 gezeigten vierten bevorzugten Ausführungsform ist eine stufenlose Längenveränderung des Verbindungselementes 41 wie bei der Ausführungsform nach Fig. 6 möglich, wobei zusätzlich eine abgestufte Veränderung der Relativposition des Verbindungsstückendes zum Achszapfen 39 wie bei der Ausführungsform nach Fig. 8 möglich ist. Bei dieser bevorzugten Ausführungsform wird die Länge des Verbindungsstückes 41 über eine Einstellschraube 47 bewirkt, die wie bei einem an sich bekannten Spannschloß am einen Ende mit einem Linksgewinde, am anderen Ende mit einem Rechtsgewinde versehen ist, wobei die Gewindeabschnitte des Spannstückes 47 dementsprechende Gewinde aufweisen. Zur Einstellung des Endpunktes, an den das Verbindungsstück 41 mit der Säulenschiene 13 verbunden ist, sind in der Säulenschiene 13 mehrere Getwindebohrungen 50-50'' vorgesehen. Im folgenden wird eine weitere bevorzugte Ausführungsform eines Verbindungsstückes anhand von Fig. 10a-c näher beschrieben, wobei dieses zum stufenlosen Funktionieren voraussetzt, daß im Säulenelement 10 zumindest abschnittsweise ein Schlitz 15 vorgesehen ist. Bei dieser bevorzugten Ausführungsform ist die Säulenschiene in zwei Abschnitte unterteilt, wobei der erste Abschnitt 13 über den Achszapfen 39 mit der Bodenschiene 22 drehbar verbunden ist, während der zweite Abschnitt 13' lediglich mit dem Endpunkt der Verbindungsstange 42 (an deren Auge 43) verbunden ist. Durch eine entsprechende Einstellung des Abstandes s zwischen den Säulenschienen-Abschnitten 13 und 13' kann der Winkel zwischen Säule und Regalboden eingestellt werden, wobei hier die Länge des Schenkels verändert wird, der im Achszapfen 39 endet. Diese Ausführungsform ist konstruktiv besonders einfach.

Bei der in Fig. 10d gezeigten bevorzugten Ausführungsform ist der Schlitz 15 dadurch gebildet, daß zwei Stabelemente 10, 10' über Verbindungsstücke 16 voneinander in Abstand gehalten sind. Die Verbindungsstücke 16 sind hierbei einfache Flachbänder mit Durchgangsbohrungen, die Säulenelemente 10, 10' bestehen aus Rohrstücken mit Innengewinden an den Enden, die über Gewindeschüsse (mit durchbrochenen Linien in Fig. 10d gezeigt) miteinander verbunden sind. Die Bohrungen der Verbindungsstücke 16 entsprechen dem Außendurchmesser der Gewindeschüsse, so daß jedes Verbindungsstück 16 zwischen zwei ineinandergeschraubten Säulenelementstücken festgesetzt ist. Mit dieser Konstruktionsweise kann auch wie in Fig. 10e gezeigt, ein noch stabileres Säulenelement aufgebaut werden, z.B. ein solches mit dreieckigem oder mehrkantigem Umriß. Weiterhin ist es möglich, bei dieser bevorzugten Ausführungsform Norm-Bogenstücke vorzusehen, die dann in einer Bodenplatte fixiert werden können, wie dies in Fig. 10d gezeigt ist.

Im Gegensatz zur Ausführungsform nach den Fig. 10a-c wird bei der in Fig. 10d gezeigten bevorzugten Ausführungsform die Säulenschiene 13 über eine einzige Befestigungsschraube 14 befestigt, die gleichzeitig den Achszapfen 39 bildet. Im übrigen entspricht diese bevorzugte Ausführungsform im wesentlichen der nach den Fig. 10a-c.

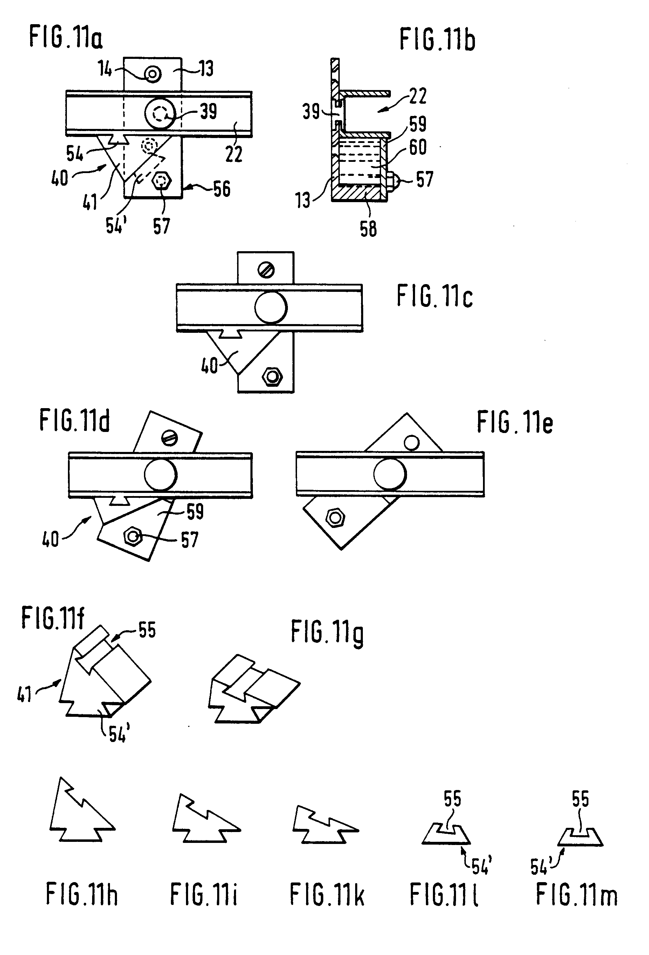

Eine weitere bevorzugte Ausführungsform eines Verbindungsstückes ist in Fig. 11 gezeigt. Hierbei ist die Anordnung nicht stufenlos, sondern abgestuft einstellbar, wobei die Verbindung zwischen der Säulenschiene 13 und der Bodenschiene 22 über ein Verbindungsstück 41 bewerkstelligt wird, das mittels Schwalbenschwanzführungen, bestehend aus Nuten 55 und Federn 54, 54' einerseits an der Bodenschiene 22, andererseits an der Säulenschiene 13 befestigbar ist und somit Drehmomente um den Achszapfen 39 in beiden Richtungen aufnehmen kann. Hierbei ist eine Feder 54 direkt an der Bodenschiene 22 und eine Nut zum Einsetzen der Feder 54' des Verbindungsstückes 41 in einem Nutsockel 60 vorgesehen, der über eine Deckplatte 59 verdeckt und fixiert wird, welche mittels einer Schraube 57 auf einen Schenkel 58 festsetzbar ist, der senkrecht von der Ebene der Säulenschiene 13 hervorragt. Dieses so gebildete Halteteil 56 verhindert ein Herausrutschen des Verbindungsstückes 41. Um eine Vielzahl von Winkeln einstellen zu können, eignet sich ein entsprechender Satz von Verbindungsstücken 41, wie er in den Figuren 11f bis 11m aufgezeigt ist. Man kann dann besonders spitze Winkel zwischen Säulenelement und Regalboden einstellen, wenn die an der Bodenschiene 22 sitzende Feder 54 wesentlich schmaler ausgebildet ist, als die im Halteteil 56 sitzende Feder 54' des Verbindungsstückes 41. In diesem Fall kann nämlich die Nut 55 des Verbindungsstückes 41 bis in die Feder 54' ragen (Fig. 11ℓ und 11m).

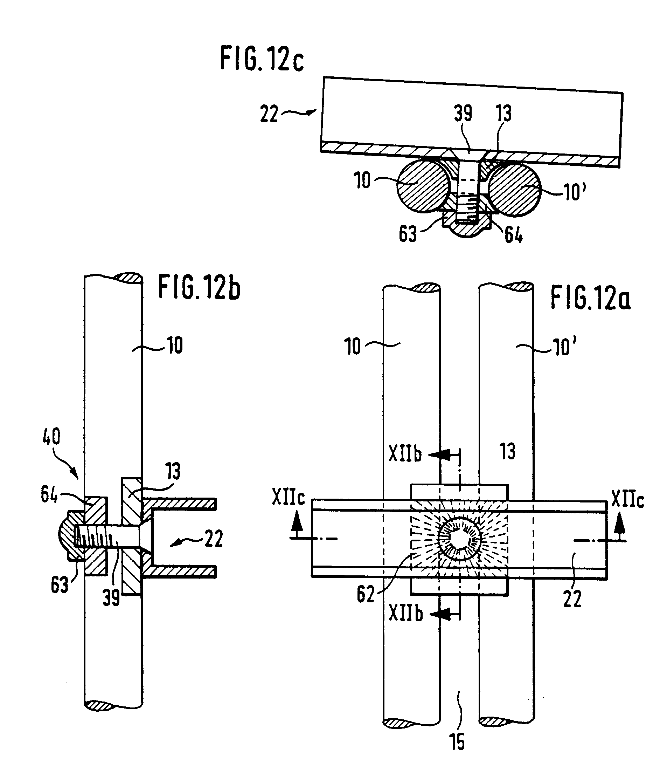

Eine andere bevorzugte Ausführungsform des Verbindungsstückes ist in Fig. 12 gezeigt. Hierbei wird von einem Säulenelement ausgegangen, das aus paarigen Elementstücken 10 und 10' (hier runde Stäbe) gebildet ist, die einen Schlitz 15 zwischeneinander freilassen. Der Achszapfen 39 wird bei dieser Ausführungsform der Erfindung von einer in Richtung auf das Säulenelement 10 bzw. in dessen Schlitz 15 ragenden Schraube gebildet, welche durch eine Bohrung in der Säulenschiene 13 hindurchragt. Der endseitige Gewindeabschnitt des Achszapfens 39 ragt durch die Bohrung eines Gegenhalters 64, der über eine Festsetzmutter 63 so in Richtung auf die Säulenschiene 13 gespannt werden kann, daß zum einen die Säulenelementabschnitte 10, 10' fest an die Säulenschiene 13 zur Bildung einer reibschlüssigen Verbindung gedrückt werden, zum anderen die Bodenschiene 22 fest mit ihrer Rückseite auf die Oberseite der Säulenschiene 13 gepreßt wird, um auch dort eine reibschlüssige Verbindung sicherzustellen. Um die Drehfestigkeit dieser Verbindung zu erhöhen, ist vorzugsweise in den Auflageflächen zwischen der Bodenschiene 22 und der Säulenschiene 13 eine Kerbung 42 vorgesehen, wie sie in Fig. 12a strichliert angedeutet ist. Bei dieser Ausführungsform wird somit über das Festziehen einer einzigen (Hut-) Mutter 63 nicht nur die Säulenschiene 13 am Säulenelement 10 festgesetzt, sondern auch gleichzeitig die drehfeste Verbindung zwischen der Säulenschiene 13 und der Bodenschiene 22 bewerkstelligt.

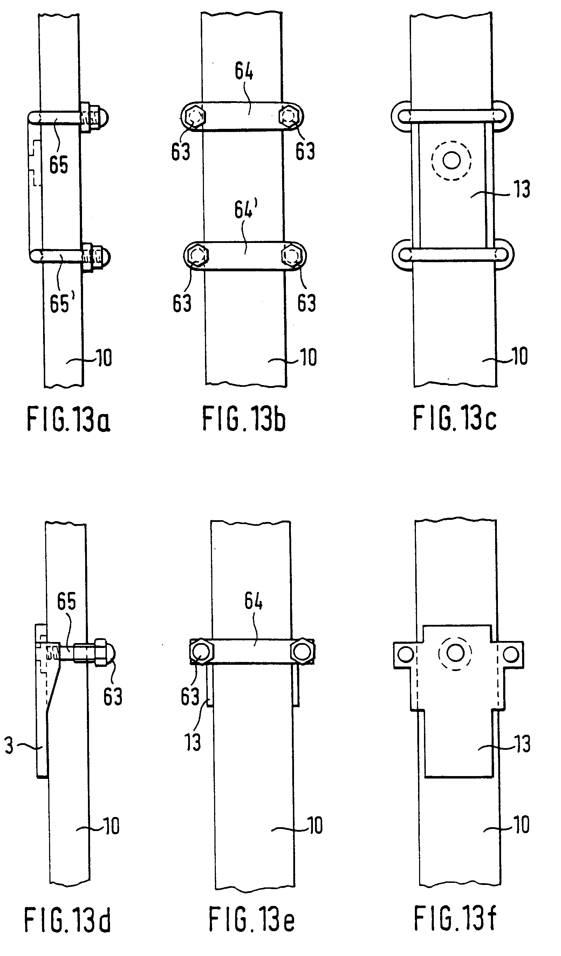

Wenn das Säulenelement keinen Schlitz aufweist und man nicht mit Reihen von Gewindebohrungen arbeiten will, um die Säulenschienen 13 zu befestigen, so eignen sich Klammeranordnungen, wie sie in Fig. 13 gezeigt sind. Hierbei sind Spannelemente 65, 65' vorgesehen, die von der Seite der Säulenschienen 13 hervorstehen und zusammen mit Gegenhaltern 64 geschlossene Rahmen bilden. Die Gegenhalter 64 sind über Festsetzmuttern 63 in Richtung auf die Säulenschienen 13 spannbar.

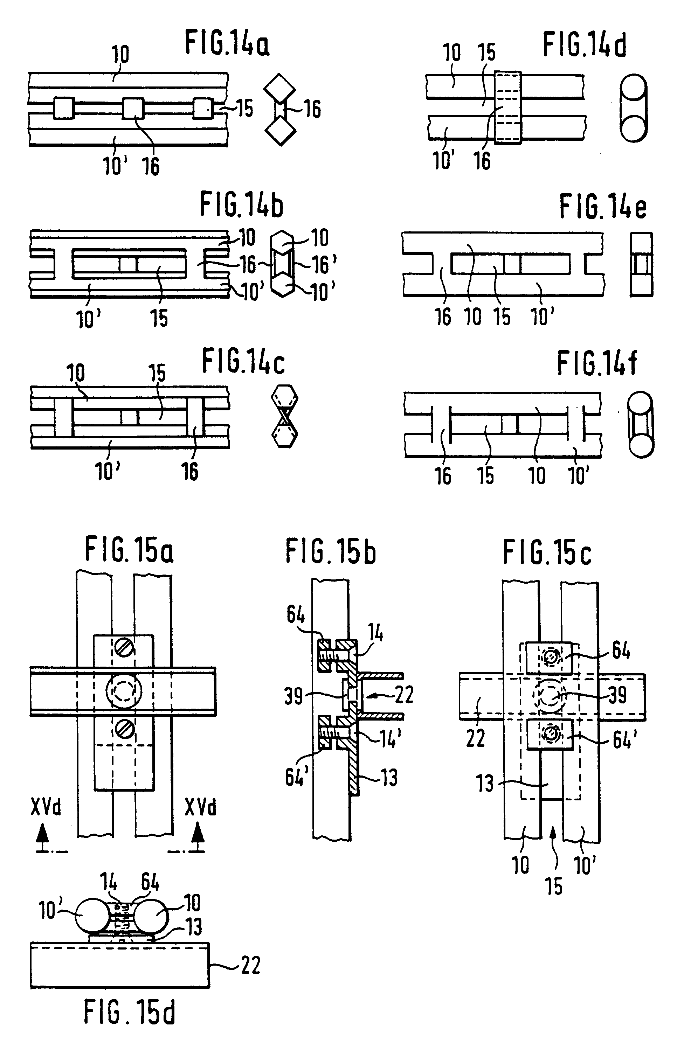

Wenn, wie im Zusammenhang mit Fig. 12 bereits angedeutet, in den Säulenelementen 10 mindestens abschnittsweise Schlitze 15 vorhanden sind, so ist das (im wesentlichen stufenlose) Fixieren von Säulenschienen 13 an den Säulenelementen 10 besonders einfach. Bei einer bevorzugten Ausführungsform sind die Säulenelemente aus zwei gleichen Elementen 10, 10' aufgebaut, die über Verbindungsstücke 16, 16' zur Bildung eines Schlitzes 15 miteinander verbunden sind. Hierbei können die Querschnitte der Elemente 10, 10' im wesentlichen beliebig gewählt werden, wie dies aus den Figuren 14a bis 14f hervorgeht. Ein weiterer Vorteil liegt bei dieser Ausgestaltung der Säulenelemente darin, daß sie besonders steif werden, ohne dabei einen allzu großen Materialaufwand vorauszusetzen.

Die anhand der Figuren 6 bis 11 gezeigten bevorzugten Ausführungsformen von Verbindungsstücken sind an Säulenelementen über die in Fig. 15 gezeigten (Prinzip-) Anordnungen befestigbar, wenn diese Säulenelemente Schlitze 15 aufweisen. Die Art der Befestigung der Säulenschiene 13 am Säulenelement 10 entspricht hierbei der in Fig. 12 gezeigten Ausführungsform, wobei jedoch die Achszapfen 39 gesondert vorgesehen sind und stattdessen die Befestigungsschrauben 14 zum Spannen der Gegenhalter 64 vorgesehen sind.

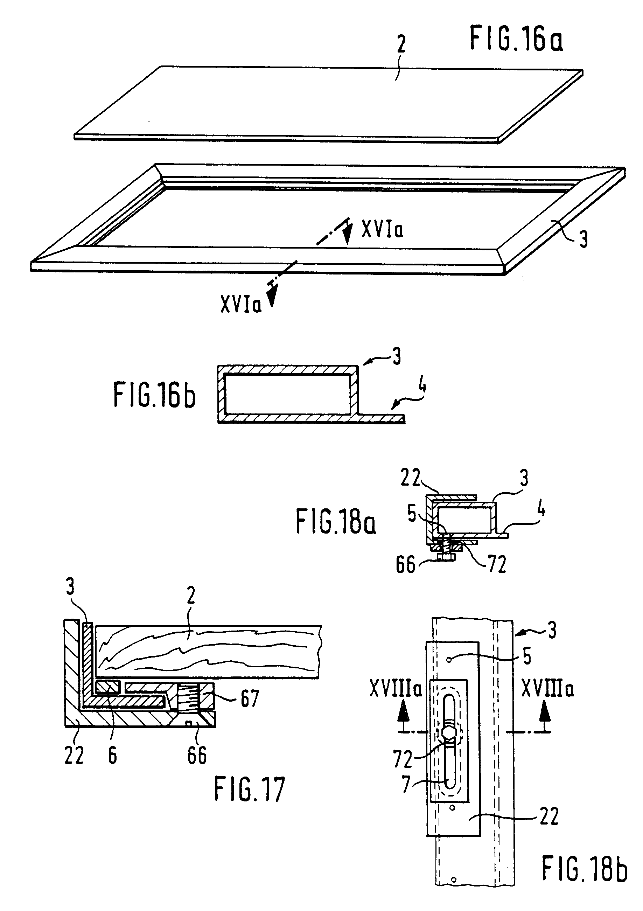

In Fig. 16 sind eine perspektivische und eine Schnittdarstellung eines Regalbodens bzw. eines Rahmens gezeigt. Aus dieser Abbildung geht hervor, daß der Rahmen 13, der vorzugsweise aus einem stabilen Material wie Metall gefertigt ist, einen im wesentlichen rechteckigen Rahmenabschnitt umfaßt, der mit einem in den Rahmen ragenden Auflagestreifen 4 versehen ist. In einen so gebildeten Rahmen 3 kann jedes Flächenelement eingesetzt werden, wobei hier die Materialwahl dem Benutzer überlassen bleibt, da die Stabilität der Anordnung durch den Rahmen 3 gewährleistet ist.

Zum Verbinden einer Bodenschiene 22 mit dem Rahmen 3 (und damit mit dem Regalboden 1) können verschiedene Anordnungen gewählt werden, die jeweils ihre spezifischen Vorteile mit sich bringen, wie dies im folgenden näher erläutert wird.

Bei der in Fig. 17 gezeigten Anordnung ist die Bodenschiene 22 L-förmig ausgebildet, wobei der zum Flächenelement 2 parallele Schenkel mit einer Bohrung vorsehen ist, über die ein Haltebügel 67 mittels einer Schraube 66 an der Bodenschiene 22 befestigt werden kann. Der Haltebügel 67 greift in den Zwischenraum zwischen dem Rahmen 3 und dem Flächenelement 2, der durch ein Distanzelement 6 zwischen Rahmen 3 und Flächenelement 2 definiert ist. Wenn das Flächenelement 2 im Rahmen 3, z.B. durch stirnseitige Schrauben, durch Klebstellen oder dergleichen befestigt ist, so kann der Rahman 3 einen L-förmigen Querschnitt aufweisen. Durch diese Anordnung wird gewährleistet, daß zum einen der Rahmen 3 in Richtung auf das Säulenelement in die Bodenschiene 22 fixiert ist, zum anderen wird der Rahmen 3 gegen ein Abheben nach oben von der Bodenschiene 22 gesichert.

Bei der in Fig. 18 gezeigten bevorzugten Ausführungsform weist die Bodenschiene 22 einen U-förmigen Querschnitt auf, so daß der Rahmen 3 zwischen den Schenkeln der Bodenschiene 22 nach oben und unten gesichert gehalten wird. Um den Rahmen 3 gegen ein Herausrutschen aus der U-förmigen Bodenschiene 22 zu sichern, sind im Rahmen 3 Bohrungen 5 (es können auch Langlöcher sein) vorgesehen, in welche als Schrauben ausgebildete Spannelemente 66 eingreifen. Die schraubenförmigen Spannelemente 66 sind in Gewindestücke 72 eingeschraubt, welche drehfest aber längsverschiebbar in Langlöchern 7 sitzen, welche in der Bodenschiene 22 parallel zum Regalboden angeordnet sind. Über diese Anordnung kann ebenfalls eine stufenlose Befestigung der Bodenschienen 22 am Rahmen 3 bewerkstelligt werden.

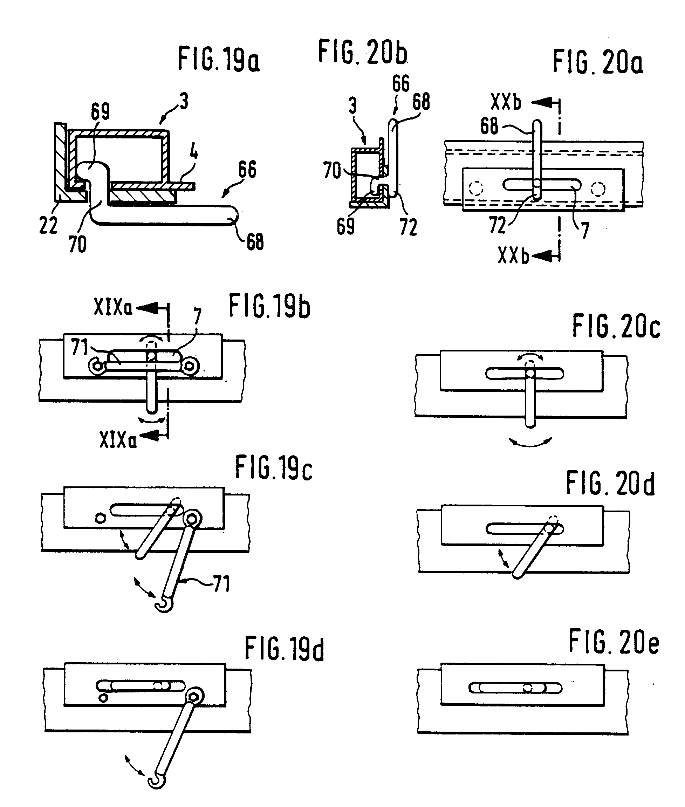

Bei der in Fig. 19 gezeigten bevorzugten Ausführungsform ist als Festsetzelement 66 ein zweifach gekröpfter Hebel vorgesehen, dessen Griff 68 über einen Verbindungsabschnitt 70 mit einer Nase 69 verbunden ist. Der Verbindungsabschnitt 70 ragt durch ein Langloch 7 in der Bodenschiene 22, die einen L-förmigen Querschnitt aufweist, sowie durch ein weiteres Langloch im Rahmen 3. Wenn man bei dieser Anordnung die Bodenschiene 22 am Rahmen 3 befestigen will, so stellt man zunächst das Festsetzelement 66 derart, daß die Längsachse der Nase 69 parallel zur Längsachse des Langloches 7 liegt und führt die Nase 69 bis in den Rahmen 3 ein. Wenn dann das Festsetzelement mittels des Griffes 68 so verschwenkt wird, daß der Griff 68 senkrecht zur Längsrichtung des Langloches 7 vom (nicht gezeigten) Säulenelement fortragt, wird der Rahmen 3 in die Bodenschiene 22 hineingezogen. Daraufhin legt man einen Festsetzbügel 71 (Figuren 19b bis 19d) über den Griff 68 und befestigt diesen an der Bodenschiene 22, so daß der Griff 68 in Richtung auf den Regalboden 1 hinuntergeklappt wird. Durch dieses Hinunterklappen wird der Regalboden 3 gegen ein Abheben nach oben aus der Bodenschiene 2 gesichert.

Bei der in Fig. 20 gezeigten bevorzugten Ausführungsform, die der nach Fig. 19 ähnlich ist, wird die Sicherung des Griffes 68 über eine zweite Nase 72 erreicht, welche vom Verbindungsstück 20 in derselben Richtung hervorsteht (also in Verlängerung des Griffes 68) wie die erste Nase 69. Diese Verbindungsart ist besonders einfach in der Handhabung, wobei auch hier (wie bei den Ausführungsformen nach den Figuren 17 und 19) die Bodenschiene 22 L-förmig ausgebildet sein kann, was aus ästhetischen Gründen wünschenswert ist.

## Patentansprüche

1. Regalsystem mit Regalböden (1), Säulenelementen (10) und mit Verbindungselementen (20) zum horizontalen Halten der Regalböden (2) an den Säulenelementen, wobei die Verbindungselemente (20) ein Gelenk mit einem Freiheitsgrad umfassen, feststellbar ausgebildet und an den Längsseiten der Regalböden (1) festsetzbar sind, so daß jeder Regalboden (1) an mindestens zwei schräg verlaufenden Säulenelementen (10 in horizontaler Stellung kippfest fixierbar ist,
**dadurch gekennzeichnet**,
daß jedes Säulenelement (10) mindestens zwei Stäbe (11, 12) und jedes Verbindungselement (20) eine entsprechende Anzahl voneinander in Längsrichtung der Regalböden (1) beabstandeter Feststellelemente (21, 21') umfaßt, über die jeder Stab (11, 12) an einem Regalboden (1) in dessen Längsrichtung fest montierbar ist.

2. Regalsystem mit Regalboden (1), Säulenelementen (10) und mit verbindungselementen (20) zum horizontalen Halten der Regalböden (1) an den Säulenelementen, wobei die Verbindungselemente (20) ein Gelenk mit einem Freiheitsgrad umfassen, feststellbar ausgebildet und an den Längsseiten der Regalböden (1) festsetzbar sind, so daß jeder Regalboden (1) an mindestens zwei schräg verlaufenden Säulenelementen (10) in horizontaler Stellung kippfest fixierbar ist und jedes Säulenelement (10) einen einzigen Stab umfaßt,
**dadurch gekennzeichnet**, daß jedes
Gelenk einen in Querrichtung der Regalböden (1) laufenden und am Säulenelement (10) festsetzbaren Achszapfen (39) sowie mindestens ein zwischen Säulenelement (10) und Regalboden (1) festsetzbares Drehsicherungselement (40) umfaßt.

3. Regalsystem nach Anspruch 1,
**dadurch gekennzeichnet**,
daß die Feststellelemente (21, 21') jeweils drehfest zwischen Regalboden (1) und Stab (11, 12) festsetzbar sind.

4. Regalsystem nach einem der Ansprüche 1 oder 3,
**dadurch gekennzeichnet**,
daß die Feststellelemente (21, 21') über eine gemeinsame Halteanordnung (23, 26, 30, 38) festsetzbar sind.

5. Regalsystem nach einem der Ansprüche 1 oder 3 - 4,
**dadurch gekennzeichnet**,
daß jedes Feststellelement (21, 21') gegeneinander spannbare Klemmhalbschalen (33, 33') umfaßt, zwischen denen ein Stab (11, 12) einspannbar ist.

6. Regalsystem nach einem der Ansprüche 1 oder 3 - 5,
**dadurch gekennzeichnet,**
daß jedes Verbindungselement (20) mit mehr als zwei voneinander beabstandeten Lagerelementen (25-25''') zur wahlweisen Aufnahme entsprechender Lagerelemente (28) von Feststellelementen (21, 21') versehen ist.

7. Regalsystem nach Anspruch 2,
**dadurch gekennzeichnet,**
daß das Drehsicherungselement (40) ein Verbindungsstück (41) umfaßt, das an einem Ende mit Abstand vom Achselement (39) an einem ersten Befestigungspunkt am Regalboden (1), am anderen Ende ebenfalls mit Abstand vom Achselement (39) an einem Befestigungspunkt an dem Säulenelement (10) befestigt ist.

8. Regalsystem nach Anspruch 7,
**dadurch gekennzeichnet**,
daß das Verbindungsstück (41) in seiner Länge zwischen den Befestigungspunkten über Einstellmittel (47) einstellbar ist (Figuren 6, 7, 9).

9. Regalsystem nach einem der Ansprüche 7 oder 8,
**dadurch gekennzeichnet,**
daß der Abstand mindestens eines Befestigungspunktes zum Achselement (39) über Einstellmittel (47, 50) einstellbar ist (Figuren 8 - 10).

10. Regalsystem nach einem der Ansprüche 8 oder 9,
**dadurch gekennzeichnet**,
daß die Einstellmittel (47) Schraubtriebe umfassen.

11. Regalsystem nach Anspruch 8,
**dadurch gekennzeichnet,**
daß das Verbindungsstück (41) als elastisch verformbares Zugelement, insbesondere als Seil- oder Kettenzug ausgebildet ist (Figur 7).

12. Regalsystem nach Anspruch 2,
**dadurch gekennzeichnet,**
daß das Drehsicherungselement (40) einen Satz von in ihren Größen abgestuften Einsätzen umfaßt, die über Befestigungsmittel (54, 55) gleichzeitig mit einem Regalboden (1) wie auch mit einem Säulenelement (10) verbindbar sind (Figur 11).

13. Regalsystem nach Anspruch 2,
**dadurch gekennzeichnet,**
daß das Drehsicherungselement (40) als Spannelement (63) zum reibschlüssigen Sperren des Achselementes (39) ausgebildet ist (Figur 12).

14. Regalsystem nach einem der vorhergehenden Ansprüche,
**dadurch gekennzeichnet,**
daß die Verbindungselemente (20) Bodenschienen (22) umfassen, über die sie an den Regalböden (1) festsetzbar sind (Figuren 17 - 20).

15. Regalsystem nach einem der Ansprüche 2 bis 15,
**dadurch gekennzeichnet,**
daß die Verbindungselemente (20) Säulenschienen (13, 13' umfassen, die an den Säulen (10) festsetzbar sind (Figur 10).

16. Regalsystem nach den Ansprüchen 14 und 15,
**dadurch gekennzeichnet,**
daß die Säulenschienen (13) über die Achselemente (39) mit den Bodenschienen (22) gegeneinander verdrehbar verbunden sind (Figur 10).

17. Regalsystem nach einem der Ansprüche 15 oder 16,
**dadurch gekennzeichnet,**
daß die Säulen (10) mindestens abschnittsweise Schlitze (15) in ihrer Längsrichtung aufweisen, in denen die Säulenschienen (13, 13') über Klemmittel (64) festsetzbar sind (Figuren 10, 12, 14).

## Claims

1. Shelving system having shelves (1), support elements (10) and with connecting elements (20) for holding the shelves (2) horizontally on the support elements, the connecting elements (20) comprising a joint with a degree of freedom, being of a lockable design and being fastenable to the longitudinal sides of the shelves (1) so that each shelf (1) may be fixed in a tilt-proof manner in a horizontal position to at least two obliquely extending support elements (10),
characterized in that
each support element (10) comprises at least two rods (11, 12) and each connecting element (20) comprises a corresponding number of locking elements (21, 21'), which are spaced apart from one another in a longitudinal direction of the shelves (1) and by means of which each rod (11, 12) may be mounted firmly on a shelf (1) in a longitudinal direction of said shelf.

2. Shelf system having shelves (1), support elements (10) and with connecting elements (20) for holding the shelves (1) horizontally on the support elements, the connecting elements (20) comprising a joint with a degree of freedom, being of a lockable design and being fastenable to the longitudinal sides of the shelves (1) so that each shelf (1) may be fixed in a tilt-proof manner in a horizontal position to at least two obliquely extending support elements (10) and each support element (10) comprising a single rod,
characterized in that each joint comprises an axle journal (39), which extends in a transverse direction of the shelves (1) and is fastenable to the support element (10), as well as at least one anti-rotation element (40) which is fastenable between support element (10) and shelf (1).

3. Shelving system according to claim 1,
characterized in that
the locking elements (21, 21') are each fastenable in a rotation-proof manner between shelf (1) and rod (11 ,12).

4. Shelving system according to one of claims 1 or 3,
characterized in that
the locking elements (21, 21') are fastenable by means of a common holding arrangement (23, 26, 30, 38).

5. Shelving system according to one of claims 1 or 3 to 4,
characterized in that
each locking element (21, 21') comprises clamping half-shells (33, 33') which may be tightened towards one another and between which a rod (11, 12) may be clamped.

6. Shelving system according to one of claims 1 or 3 to 5,
characterized in that
each connecting element (20) is provided with more than two spaced-apart bearing elements (25 - 25''') for selectively receiving corresponding bearing elements (28) of locking elements (21, 21').

7. Shelving system according to claim 2,
characterized in that
the anti-rotation element (40) comprises a joining piece (41) which is fastened at one end, at a distance from the axle element (39), to a first fastening point on the shelf (1) and at the other end, likewise at a distance from the axle element (39), to a fastening point on the support element (10).

8. Shelving system according to claim 7,
characterized in that
the joining piece (41) is adjustable in length between the fastening points by means of adjusting means (47) (Figures 6, 7, 9).

9. Shelving system according to one of claims 7 or 8,
characterized in that
the distance of at least one fastening point from the axle element (39) is adjustable by means of adjusting means (47, 50) (Figures 8 - 10).

10. Shelving system according to one of claims 8 or 9,
characterized in that
the adjusting means (47) comprise worm drives.

11. Shelving systems according to claim 8,
characterized in that
the joining piece (41) takes the form of a resiliently deformable tension element, in particular a tension cable or chain (Figure 7).

12. Shelving system according to claim 2,
characterized in that
the anti-rotation element (40) comprises a set of inserts, which are graded in size and are connectable via fastening means (54, 55) simultaneously to a shelf (1) and to a support element (10) (Figure 11).

13. Shelving system according to claim 2,
characterized in that
the anti-rotation element (40) takes the form of a tensioning element (63) for friction-tight blocking of the axle element (39) (Figure 12).

14. Shelving system according to one of the preceding claims,
characterized in that
the connecting elements (20) comprise bottom rails (22), by means of which they are fastenable to the shelves (1) (Figures 17 - 20).

15. Shelving system according to one of claims 2 to 15,
characterized in that
the connecting elements (20) comprise support rails (13, 13') which are fastenable to the supports (10) (Figure 10).

16. Shelving system according to claims 14 and 15,
characterized in that
the support rails (13) are connected by the axle elements (39) to the bottom rails (22) so as to be rotatable towards one another (Figure 10).

17. Shelving system according to one of claims 15 or 16,
characterized in that
the supports (10) at least in sections have longitudinally extending slots (15), in which the support rails (13, 13') are fastenable by means of clamping means (64) (Figures 10, 12, 14).

## Revendications

1. Système de rayonnage comportant des tablettes (1), des éléments colonnes (10) et des éléments de jonction (20) pour la fixation horizontale des tablettes (1) aux éléments colonnes, les éléments de jonction (20) comprenant une articulation à un degré de liberté, étant immobilisables et pouvant être fixés aux côtés longitudinaux des tablettes (1), de sorte que chaque tablette (1) peut être fixée en position horizontale, sans possibilité de basculement, à au moins deux éléments colonnes (10) obliques, caractérisé par le fait que chaque élément colonne (10) comprend au moins deux barres (11, 12) et chaque élément de jonction (20) comprend un nombre correspondant d'éléments de fixation (21, 21') espacés dans la direction longitudinale des tablettes (1) par lesquels chaque barre (11, 12) peut être montée sur une tablette (1) de manière fixe dans la direction longitudinale de celle-ci.

2. Système de rayonnage comportant des tablettes (1), des éléments colonnes (10) et des éléments de jonction (20) pour la fixation horizontale des tablettes (1) aux éléments colonnes, les éléments de jonction (20) comprenant une articulation à un degré de liberté, étant immobilisables et pouvant être fixés aux côtés longitudinaux des tablettes (1), de sorte que chaque tablette (1) peut être fixée en position horizontale, sans possibilité de basculement, à au moins deux éléments colonnes (10) obliques, et chaque élément colonne (10) comprenant une seule barre, caractérisé par le fait que chaque articulation comprend un axe (39) s'étendant dans la direction transversale des tablettes (1) et pouvant être fixé à l'élément colonne (10) et au moins un élément anti-rotation (40) pouvant être fixé entre l'élément colonne (10) et la tablette (1).

3. Système de rayonnage selon la revendication 1, caractérisé par le fait que les éléments de fixation (21, 21') peuvent être fixés chacun sans liberté de rotation entre la tablette (1) et la barre (11, 12).

4. Système de rayonnage selon l'une des revendications 1 et 3, caractérisé par le fait que les éléments de fixation (21, 21') peuvent être fixés au moyen d'un dispositif de fixation commun (23, 26, 30, 38).

5. Système de rayonnage selon l'une des revendications 1, 3 et 4, caractérisé par le fait que chaque élément de fixation (21, 21') comprend des demi-coquilles de serrage (33, 33') pouvant être serrées l'une vers l'autre entre lesquelles peut être serrée une barre (11, 12).

6. Système de rayonnage selon l'une des revendications 1 et 3 à 5, caractérisé par le fait que chaque élément de jonction (20) est pourvu de plus de deux éléments d'appui espacés (25 à 25''') destinés à recevoir au choix des éléments d'appui correspondants (28) d'éléments de fixation (21, 21').

7. Système de rayonnage selon la revendication 2, caractérisé par le fait que l'élément anti-rotation (40) comprend une pièce de jonction (41) qui est fixée à une extrémité, à distance de l'axe (39), à un premier point de fixation situé sur la tablette (1) et à l'autre extrémité, également à distance de l'axe (39), à un point de fixation situé sur l'élément colonne (10).

8. Système de rayonnage selon la revendication 7, caractérisé par le fait que la pièce de jonction (41) a une longueur entre les points de fixation réglable par des moyens de réglage (47) (fig. 6, 7, 9).

9. Système de rayonnage selon l'une des revendications 7 et 8, caractérisé par le fait que la distance d'au moins un point de fixation à l'axe (39) est réglable par des moyens de réglage (47, 50) (fig. 8 à 10).

10. Système de rayonnage selon l'une des revendications 8 et 9, caractérisé par le fait que les moyens de réglage (47) comprennent des mécanismes à vis.

11. Système de rayonnage selon la revendication 8, caractérisé par le fait que la pièce de jonction (41) est un élément de traction déformable élastiquement, en particulier un câble ou une chaîne (fig. 7).

12. Système de rayonnage selon la revendication 2, caractérisé par le fait que l'élément anti-rotation (40) comprend un jeu d'éléments rapportés de grandeurs échelonnées qui peuvent être joints par des moyens de fixation (54, 55) à la fois à une tablette (1) et à un élément colonne (10) (fig. 11).

13. Système de rayonnage selon la revendication 2, caractérisé par le fait que l'élément anti-rotation (40) est un élément de serrage (63) pour le blocage par friction de l'axe (39) (fig. 12).

14. Système de rayonnage selon l'une des revendications précédentes, caractérisé par le fait que les éléments de jonction (20) comprennent des barrettes de tablette (22) par lesquelles ils peuvent être fixés aux tablettes (1) (fig. 17 à 20).

15. Système de rayonnage selon l'une des revendications 2 à 15, caractérisé par le fait que les éléments de jonction (20) comprennent des barrettes de colonne (13, 13') qui peuvent être fixées aux colonnes (10) (fig. 10).

16. Système de rayonnage selon les revendications 14 et 15, caractérisé par le fait que les barrettes de colonne (13) sont jointes par les axes (39) aux barrettes de tablette (22) avec possibilité de rotation relative (fig. 10).

17. Système de rayonnage selon l'une des revendications 15 et 16, caractérisé par le fait que les colonnes (10) présentent au moins par endroits, dans leur direction longitudinale, des fentes (15) dans lesquelles les barrettes de colonne (13, 13') peuvent être fixées par des moyens de serrage (64) (fig. 10, 12, 14).
